# EUROPÄISCHE PATENTSCHRIFT

(11) **EP 3 554 787 B1**
(45) Veröffentlichungstag und Bekanntmachung des Hinweises auf die Patenterteilung: **25.09.2024**
(21) Anmeldenummer: 17809327.4
(22) Anmeldetag: 11.12.2017
(51) Int. Cl.: B29C 44/08, B29C 44/18, B29C 64/106, B33Y 10/00, B33Y 70/00, B29K 75/00, B29L 31/54

(54) **VERFAHREN ZUR HERSTELLUNG EINES 3D-GEDRUCKTEN, SCHAUMGEFÜLLTEN GEGENSTANDES**
METHOD FOR PRODUCING A 3D PRINTED FOAM-FILLED OBJECT
PROCÉDÉ DE PRODUCTION D'UN OBJET REMPLI DE MOUSSE IMPRIMÉ EN 3D

(30) Priorität: 14.12.2016 EP 16203988
(43) Veröffentlichungstag der Anmeldung: 23.10.2019
(73) Patentinhaber: Stratasys, Inc., Eden Prairie, MN 55344 (US)
(72) Erfinder: ACHTEN, Dirk, 51375 Leverkusen (DE); BÜSGEN, Thomas, 51377 Leverkusen (DE); DEGIORGIO, Nicolas, 47807 Krefeld (DE); AKBAS, Levent, 58455 Witten (DE); METTMANN, Bettina, 41542 Dormagen (DE); TOMCZYK, Christoph, 51379 Leverkusen (DE); WAGNER, Roland, 51375 Leverkusen (DE); ALBACH, Rolf, 51061 Köln (DE)
(74) Vertreter: Davepon, Björn
(86) Internationale Anmeldenummer: PCT/EP2017/082154
(87) Internationale Veröffentlichungsnummer: WO 2018/108781

(56) Entgegenhaltungen:
- WO-A1-2016/086268
- WO-A1-2016/142930
- US-A1- 2015 061 190
- US-A1- 2015 133 573
- US-A1- 2016 243 721
- US-A1- 2016 263 444
- POLYTEK DEVELOPMENT CORP.: "DESCRIPTION: EasyFlo Series Liquid Plastics Technical Bulletin", 12 July 2016 (2016-07-12), pages 1 - 2, XP055380507, Retrieved from the Internet <URL:http://mbfgfiles.co.uk/datasheets/easyflo_tech.pdf> [retrieved on 20170612]

## Beschreibung

Die vorliegende Erfindung betrifft ein Verfahren zur Herstellung eines Gegenstandes, umfassend die Schritte: Herstellen einer Hülle, welche ein Volumen zur Aufnahme eines Fluids umfasst, mittels eines additiven Herstellungsverfahrens aus einem Aufbaumaterial; Bereitstellen einer Reaktionsmischung umfassend eine Polyisocyanatkomponente und eine Polyolkomponente in dem Volumen und Reagierenlassen der Reaktionsmischung in dem Volumen, so dass ein wenigstens teilweise in dem Volumen vorliegendes Polymer erhalten wird. Die Erfindung betrifft weiterhin einen Gegenstand, erhältlich durch ein erfindungsgemäßes Verfahren, umfassend eine Hülle, welche ein innerhalb der Hülle befindliches Volumen definiert und einen das Volumen ganz oder teilweise ausfüllenden Schaum. Die Hülle kann nachträglich ganz oder teilweise entfernt werden, um komplex geformte Schaumkörper zu erhalten.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Eine weitere Gruppe von additiven Fertigungsverfahren setzt radikalisch vernetzbare Harze ein, welche gegebenenfalls über einen zweiten Härtungsmechanismus ihre Endfestigkeit im gebildeten Gegenstand erhalten. Beispiele für solche Verfahren sind Stereolithographieverfahren und das davon abgeleitete sogenannte DLP-Verfahren.

Im technischen Gebiet der Beschichtungen sind sogenannte "dual cure"-Systeme bekannt, bei denen das flüssig aufgetragene Beschichtungsmaterial zunächst radikalisch, beispielsweise photochemisch, vernetzt wird und anschließend über Reaktionen von NCO-Gruppen mit geeigneten Reaktionspartnern weiter aushärten.

Das Vorliegen von Schaum oder anderen Füllungen zwischen 3D-gedruckten Wänden ist beispielsweise aus den Patentanmeldungen WO 2015/065936 A2, WO 2015/139095 A1, WO 2016/086268 A1, WO 2016/124432 A1 oder US 2016/059485 A1 bekannt. So offenbart WO 2015/139095 A1 ein Verfahren zur Herstellung eines Komposit-Objekts mit einer Computergesteuerten Vorrichtung und eine solche Vorrichtung offenbart. Die Vorrichtung umfasst ein Reservoir mit einem flüssigen, härtbaren ersten Material, Mittel zur selektiven Verfestigung des ersten Materials und Mittel zur selektiven Ablage eines zweiten Materials. Das Verfahren umfasst die Schritte des selektiven Ablegens von Portionen des zweiten Materials und des selektiven Verfestigens von Abschnitten des ersten Materials, so dass die verfestigten Abschnitte des ersten Materials und die abgelegten Portionen des zweiten Materials das Komposit-Objekt bilden.

WO 2016/086268 A1 beschreibt ein Verfahren zur Herstellung eines Auftriebsmoduls für ein Untersee-Auftriebssystem mit den Schritten: Bilden einer Hülle, wenigstens teilweise, durch ein additives Herstellungsverfahren; Einführen eines Auftriebsmaterials in die Hülle und Versiegeln der Hülle.

WO 2016/142930 A1 offenbart unter anderem ein Verfahren zur Herstellung eines dreidimensionalen Gegenstands mittels einer "3D object manufacturing machine" mit einem Haupt- und einem Satelliten-Materialverteilerkopf. Dabei kann mittels dem Satelliten-Materialverteilerkopf ein Zwei-Komponenten Material wie beispielsweise "EasyFlo Spray foam FR8 Liquid Plastic" oder ähnliche Polyurethan-Schaumstoffe in das Innere des dreidimensionalen Objekts verteilt werden, wodurch eine verstärkte, haltbare Innenhülle entsteht, ohne das äußere Erscheinungsbild des Modells zu beeinträchtigen.

Das Einführen von schaumbildenden Reaktionsgemischen in Hohlräume, wie es bei der Herstellung von PUR- oder PUR/PIR-Schaumkörpern bekannt ist, lässt sich nicht ohne weiteres auf 3D-gedruckte Hüllen übertragen. Reaktionsgemische für sogenannte "foam in place"-Verfahren oder "reaction injection moulding"-Verfahren sind auf hohe Reaktionsgeschwindigkeiten und dementsprechend niedrige Entformzeiten hin ausgelegt. Die hierbei auftretenden Drücke durch den aufsteigenden Schaum und das freigesetzte Treibmittel können jedoch leicht die mechanische Belastbarkeit von 3D-gedruckten Hüllen übersteigen.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die herzustellenden Gegenstände möglichst kosteneffizient und/oder individualisiert und/oder ressourcenschonend erhalten werden können, was insbesondere die Wiederverwertbarkeit von Aufbaumaterial betrifft.

Erfindungsgemäß gelöst wird die Aufgabe durch ein Verfahren gemäß Anspruch 1 und einen Gegenstand gemäß Anspruch 13. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands umfasst die Schritte:
- Herstellen einer Hülle, welche ein Volumen zur Aufnahme eines Fluids umfasst, mittels eines additiven Herstellungsverfahrens aus einem Aufbaumaterial;
- Bereitstellen einer Reaktionsmischung umfassend eine Polyisocyanatkomponente und eine Polyolkomponente in dem Volumen;
- Reagierenlassen der Reaktionsmischung in dem Volumen, so dass ein wenigstens teilweise in dem Volumen vorliegendes Polymer erhalten wird.

In dem Verfahren weist die Reaktionsmischung eine Abbindezeit von ≥ 2 Minuten auf.

Durch das erfindungsgemäße Verfahren lassen sich Gegenstände herstellen, deren äußere Form nur durch die Leistungsfähigkeit des gewählten additiven Fertigungsverfahrens und der eingesetzten Geräte beschränkt ist. Eine mechanische Verstärkung der Gegenstände erfolgt durch das durch Reaktion erhaltene Polymer. Somit lassen sich auch die Fertigungszeiten für die Gegenstände verringern, da nur die äußere Hülle gefertigt werden muss.

Weiter lässt sich durch das erfindungsgemäße Verfahren ein komplex geformter Schaumgegenstand mit innenliegenden Schaumgeometrien herstellen, welcher durch herkömmliche Verfahren nicht zugänglich ist. In diesem Verfahren kann das durch ein additives Verfahren gefertigte formgebende Aufbaumaterial bevorzugt z.B. durch Schmelzen, Thermolyse oder Hydrolyse zum Teil zumindest wieder entfernt werden.

Vorzugsweise beträgt die Abbindezeit ≥ 3 Minuten, mehr bevorzugt ≥ 5 Minuten. Es ist weiter bevorzugt, dass die Abbindezeit ≥ 3 Minuten bis ≤ 90 Minuten oder ≥ 5 Minuten bis ≤ 60 Minuten beträgt.

Die Abbindezeit ist diejenige Zeit, nach der bei der Polyaddition zwischen NCO-reaktiven Komponenten und Polyisocyanat-Komponenten ein theoretisch unendlich ausgedehntes Polymer entstanden ist. Die Abbindezeit lässt sich experimentell dadurch ermitteln, dass in das aufschäumende Reaktionsgemisch in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit.

Reaktionsmischungen mit den erfindungsgemäßen, in der Fachwelt als langsam angesehenen Abbindezeiten gestatten es, dass die unerwünschten Nebeneffekte der exothermen Reaktion der Reaktionsmischung unter Ausbildung eines PUR- oder PUR/PIR-Materials die Hülle nicht beschädigen bzw. bei komplexen Geometrien zu einer ungewünschten stark uneinheitlichen Ausbildung der Schaumstruktur führen. Eine unerwünschte Wirkung ist zum Beispiel das Aufschmelzen oder Erweichen einer thermoplastischen Hülle unter Verlust der vorgesehenen Form. Durch eine langsamere Reaktion kann die freigesetzte Reaktionswärme besser abgeführt werden. Bei geschlossenen Hüllen ist zusätzlich der Druckaufbau im Inneren der Hülle durch die Reaktion unerwünscht, insbesondere in Kombination mit einem Aufschmelzen oder Erweichen von thermoplastischem Hüllenmaterial. Je langsamer die Reaktion fortschreitet, desto mehr Gas kann durch die Hülle nach Außen hindurchdiffundieren. Für das erfindungsgemäße Verfahren ist dabei gegebenenfalls erwünscht, das die additive gefertigte Hülle nicht vollständig gasdicht und/oder flüssigkeitsdicht ist.

Die erfindungsgemäße vorgesehene Abbindezeit kann durch verschiedene Maßnahmen einzeln oder in Kombination erreicht werden. So kann die Reaktionsmischung einen Amin-Katalysator enthalten. Eine andere Maßnahme ist der Einsatz von langsamer reagierenden aliphatischen Polyisocyanaten. Schließlich kann die Polyolkomponente difunktionelle Polyole enthalten, welche die Vernetzungsdichte im Endprodukt und auch im reagierenden Reaktionsgemisch herabsetzen und damit gegebenenfalls auch einen verlängernden Einfluss auf die Abbindezeit haben.

Zur Vereinfachung des Bereitstellens der Reaktionsmischung kann diese niedrigviskos eingestellt sein. Beispielsweise kann die Reaktionsmischung eine anfängliche Viskosität (20 °C, ASTM D 2393), das heißt unmittelbar nach dem Vermischen von Polyolkomponente und Isocyanatkomponente, von ≥ 100 mPas bis ≤ 5000 mPas aufweisen.

Das Volumen kann beispielsweise ≥ 1 cm³ bis ≤ 5000 cm³ betragen.

Nach dem Bereitstellen der Reaktionsmischung in dem Volumen kann die Hülle mitsamt der enthaltenen Reaktionsmischung im Raum gedreht oder geschwenkt werden, so dass sich die Reaktionsmischung gleichmäßig in der zur Verfügung stehenden Hülle verteilen kann.

Es sind Fälle denkbar, in denen die Reaktionsmischung kein Treibmittel enthält und somit nicht zu einem Schaum aushärtet. Dann würde das erhaltene Polymer als massive Schicht auf der Innenseite der Hülle als dessen mechanische Verstärkung wirken. Die Vorteile des erfindungsgemäßen Verfahrens kommen jedoch besonders zum Tragen, wenn die Reaktionsmischung auch ein Treibmittel enthält. Hierbei kann es sich um physikalische und/oder chemische Treibmittel handeln.

Vorzugsweise umfasst das Aufbaumaterial ein Polyurethan-Polymer. Dann können Komponenten in der Reaktionsmischung mit noch verfügbaren reaktiven Gruppen des in der Hülle vorliegenden Polyurethan-Polymers unter Ausbildung einer stoffschlüssigen Verbindung miteinander reagieren. Besonders bevorzugt sind thermoplastische Polyurethane (TPU), insbesondere thermoplastische Polyurethan-Elastomere (TPE).

Zur Herstellung des Polyurethan-Polymers im Aufbaumaterial eignen sich die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispielsweise können NCO-terminierte Prepolymere eingesetzt werden.

Als NCO-reaktive Verbindungen mit Zerewitinoff-aktiven H-Atomen zur Herstellung des Polyurethan-Polymers im Aufbaumaterial können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z. B. 1,2-Ethandiol, 1,3- bzw. 1,2-Propandiol, 1,4-Butandiol, 1,5-Petandiol, 1,6-Hexandiol), Triole (z. B. Glycerin, Trimethylolpropan) und Tetraole (z. B. Pentaerythrit) sein, kurzkettige Aminoalkohole, Polyamine aber auch höhermolekulare Polyhydroxyverbindungen wie Polyetherpolyole, Polyesterpolyole, Polycarbonatpolyole, Polyethercarbonatdiole, Polysiloxanpolyole, Polyamine und Polyetherpolyamine sowie Polybutadienpolyole.

Die NCO-Gruppen im Polyurethan-Polymer des Aufbaumaterials können teilweise blockiert sein. Dann umfasst das erfindungsgemäße Verfahren weiterhin den Schritt des Deblockierens dieser NCO-Gruppen. Nach ihrer Deblockierung stehen sie so für Reaktionen mit der Reaktionsmischung zur Verfügung unter Ausbildung einer stoffschlüssigen Verbindung.

Das Blockierungsmittel wird so gewählt, dass bei Erwärmung die NCO-Gruppen wenigstens teilweise deblockieren. Beispiele für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1- Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel.

In einer bevorzugten Ausführungsform ist das Aufbaumaterial radikalisch vernetzbar und umfasst Gruppen mit Zerewitinoff-aktiven H-Atomen, die Hülle wird aus einem Vorläufer erhalten und das Verfahren umfasst die Schritte:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;

wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und
wobei das radikalisch vernetzbare Aufbaumaterial eine Viskosität (23 °C, DIN EN ISO 2884-1) von ≥ 5 mPas bis ≤ 100000 mPas aufweist,
wobei das radikalisch vernetzbare Aufbaumaterial eine härtbare Komponente umfasst, in der NCO-Gruppen und olefinische C=C-Doppelbindungen vorliegen
und nach Schritt III) weiterhin Schritt IV) durchgeführt wird:
   IV) Erwärmen des nach Schritt III) erhaltenen Vorläufers auf eine Temperatur von ≥ 50 °C, so dass die Hülle erhalten wird.

In dieser Variante wird somit die Hülle in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Hülle ohne die Form weiter zu verändern in eine mechanisch dauerhaftere Hülle überführt.

In Schritt I) dieser Variante des Verfahrens erfolgt das Abscheiden eines radikalisch vernetzten Aufbaumaterials auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Aufbaumaterials auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist in dieser Verfahrensvariante vorgesehen, dass das Abscheiden eines radikalisch vernetzten Aufbaumaterials wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Vorläufers, erfolgt. Dieses kann sowohl durch selektives Belichten (Stereolithographie, DLP) des vernetzbaren Aufbaumaterials als auch durch selektives Auftragen des vernetzbaren Aufbaumaterials, gefolgt von einem Belichtungsschritt, der aufgrund des vorigen selektiven Auftragens des vernetzbaren Aufbaumaterials nicht mehr selektiv sein muss (Inkjet-Verfahren).

Im Kontext dieser Verfahrensvariante werden die Begriffe "radikalisch vernetzbares Aufbaumaterial" und "radikalisch vernetztes Aufbaumaterial" benutzt. Hierbei wird das radikalisch vernetzbare Aufbaumaterial durch das Belichten und/oder Bestrahlen, welches radikalische Vernetzungsreaktionen auslöst, in das radikalisch vernetzte Aufbaumaterial überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell der herzustellenden Hülle erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Aufbaumaterial weist in dieser Verfahrensvariante eine Viskosität (23 °C, DIN EN ISO 2884-1) von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 10000 mPas, mehr bevorzugt > 500 mPas bis ≤ 5000 mPas.

Weiterhin umfasst in dem Verfahren das radikalisch vernetzbare Harz eine härtbare Komponente, in der NCO-Gruppen und olefinische C=C-Doppelbindungen vorliegen. In dieser härtbaren Komponente kann das molare Verhältnis von NCO-Gruppen und olefinischen C=C-Doppelbindungen in einem Bereich von ≥ 1:5 bis ≤ 5:1 (bevorzugt ≥ 1:4 bis ≤ 4:1, mehr bevorzugt ≥ 1:3 bis ≤ 3:1) liegen. Das molekulare Verhältnis dieser funktionellen Gruppen lässt sich durch die Integration der Signale einer Probe im ¹³C-NMR-Spektrum ermitteln.

Neben der härtbaren Komponente kann das radikalisch vernetzbare Aufbaumaterial auch eine nicht härtbare Komponente umfassen, in der beispielsweise Stabilisatoren, Füllstoffe und dergleichen zusammengefasst sind. In der härtbaren Komponente können die NCO-Gruppen und die olefinischen C=C-Doppelbindungen in getrennten Molekülen und/oder in einem gemeinsamen Molekül vorliegen. Wenn NCO-Gruppen und olefinische C=C-Doppelbindungen in getrennten Molekülen vorliegen, weist der nach Schritt IV) dieser Verfahrensvariante erhaltene Körper ein interpenetrierendes Polymer-Netzwerk auf.

In dieser Variante des Verfahrens wird weiterhin nach Schritt III) weiterhin Schritt IV) durchgeführt. In diesem Schritt erfolgt das Erwärmen des nach Schritt III) erhaltenen Vorläufers auf eine Temperatur von ≥ 50 °C, vorzugsweise ≥ 65 °C, mehr bevorzugt ≥ 80 °C, besonders bevorzugt ≥ 80 °C bis ≤ 200 °C, so dass die Hülle erhalten wird. Das Erwärmen kann für eine Zeitspanne von ≥ 1 Minute, bevorzugt ≥ 5 Minuten, mehr bevorzugt ≥ 10 Minuten bis ≤ 24 Stunden bevorzugt ≤ 8 Stunden, besonders bevorzugt < 4 Stunden, erfolgen.

Vorzugsweise wird die Reaktion durchgeführt, bis ≤ 20%, bevorzugt ≤ 10% und mehr bevorzugt ≤ 5% der ursprünglich vorhandenen NCO-Gruppen noch vorhanden sind. Dieses lässt sich mittels quantitativer IR-Spektroskopie bestimmen

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G` und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Aufbaumaterial kann ein Speichermodul G` (DMA, Platte/Platte-Oszillationsviskosimeter gemäß ISO 6721-10 bei 20 °C und einer Scherrate von 1/s) von ≥ 10⁶ Pa aufweisen.

Das radikalisch vernetzbare Aufbaumaterial kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Aufbaumaterials vor.

Geeignete Füllstoffe sind beispielsweise AlOH₃, CaCO₃, Metallpigmente wie TiOz und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Aufbaumaterial vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Aufbaumaterials, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Aufbaumaterials, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

In einer weiteren bevorzugten Ausführungsform liegen in de radikalisch vernetzbaren Aufbaumaterial die olefinischen Doppelbindungen zumindest teilweise in Form von (Meth)Acrylatgruppen vor.

In einer weiteren bevorzugten Ausführungsform umfasst das radikalisch vernetzbare Aufbaumaterial eine Verbindung, die aus der Reaktion eines NCO-terminierten Polyisocyanatprepolymers mit einem, bezogen auf die freien NCO-Gruppen, molaren Unterschuss eines Hydroxyalkyl(meth)acrylats erhältlich ist.

In einer weiteren bevorzugten Ausführungsform umfasst das radikalisch vernetzbare Aufbaumaterial eine Verbindung, die aus der Reaktion eines NCO-terminierten Polyisocyanurats mit einem, bezogen auf die freien NCO-Gruppen, molaren Unterschuss eines Hydroxyalkyl(meth)acrylats erhältlich ist.

Geeignete Polyisocyanate zur Herstellung der NCO-terminierten Polyisocyanurate und Prepolymere sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppentragende Polyether-, Polyester-, Polyacrylat, Polyepoxyd oder Polycarbonat-Prepolymere als Edukte der Isocyanurat-Bildung eingesetzt werden. Geeignete Trimerisierungskatalysatoren werden weiter unten im Zusammenhang mit einer anderen Ausführungsform beschrieben.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Die Reaktion zwischen dem Hydroxyalkyl(meth)acrylat und dem NCO-terminierten Polyisocyanurat kann durch die üblichen Urethanisierungskatalysatoren wie DBTL katalysiert werden. Bei dieser Reaktion kann das molare Verhältnis zwischen NCO-Gruppen und OH-Gruppen des Hydroxyalkyl(meth)acrylats in einem Bereich von ≥10:1 bis ≤ 1,1:1 (bevorzugt ≥ 5:1 bis ≤ 1,5:1, mehr bevorzugt ≥ 4:1 bis ≤ 2:1) liegen. Die erhaltene härtbare Verbindung kann ein zahlenmittleres Molekulargewicht Mₙ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Polyisocyanurats mit Hydroxethyl(meth)acrylat erhalten wurde, wobei das NCO-terminierte Polyisocyanurat aus 1,6-Hexamethylendiisocyanat in Gegenwart eines Isocyanat-Trimerisierungskatalysators erhalten wurde. Diese härtbare Verbindung hat ein zahlenmittleres Molekulargewicht Mₙ von ≥ 400 g/mol bis ≤ 3000 g/mol und ein molares Verhältnis von NCO-Gruppen und olefinischen C=C-Doppelbindungen in einem Bereich von ≥ 1:5 bis ≤ 5:1. besonders bevorzugt ≥1:3 bis ≤ 3:1, ganz besonders bevorzugt. ≥1:2 bis ≤ 2:1.

In einer weiteren bevorzugten Ausführungsform umfasst das radikalisch vernetzbare Harz weiterhin einen Radikalstarter und/oder einen Isocyanat-Trimerisierungskatalysator. Um eine unerwünschte Erhöhung der Viskosität des radikalisch vernetzbaren Harzes zu verhindern, können Radikalstarter und/oder Isocyanat-Trimerisierungskatalysator erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur^{®}500 (eine Mischung von Benzophenon und (1-Hydroxycyclohexyl)phenylketon, Fa. Ciba, Lampertheim, DE), Irgacure^{®}819 DW (Phenylbis-(2, 4, 6-trimethylbenzoyl)phosphinoxid, Fa. Ciba, Lampertheim, DE) oder Esacure^{®} KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es ist eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

In dieser Verfahrensvariante kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

In einer weiteren bevorzugten Ausführungsform weist das Verfahren die Merkmale auf:
- der Träger ist innerhalb eines Behälters angeordnet und ist vertikal in Schwerkraftrichtung absenkbar,
- der Behälter enthält das radikalisch vernetzbare Aufbaumaterial in einer Menge, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) wird der Träger um eine vorbestimmte Strecke abgesenkt, so dass über der in vertikaler Richtung gesehen obersten Lage des vernetzten Aufbaumaterials sich eine Schicht des radikalisch vernetzbaren Aufbaumaterials bildet und
- in Schritt II) belichtet und/oder bestrahlt ein Energiestrahl den ausgewählten Bereich der Schicht des radikalisch vernetzbaren Aufbaumaterials, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 µm bis ≤ 2000 µm abgesenkt werden.

In einer weiteren bevorzugten Ausführungsform weist das Verfahren die Merkmale auf:
- der Träger ist innerhalb eines Behälters angeordnet ist und vertikal entgegen der Schwerkraftrichtung anhebbar,
- der Behälter stellt das radikalisch vernetzbare Aufbaumaterial bereit,
- vor jedem Schritt II) wird der Träger um eine vorbestimmte Strecke angehoben, so dass unter der in vertikaler Richtung gesehen untersten Lage des vernetzten Aufbaumaterials sich eine Schicht des radikalisch vernetzbaren Aufbaumaterials bildet und
- in Schritt II) belichtet und/oder bestrahlt eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 2000 µm angehoben werden.

In einer weiteren bevorzugten Ausführungsform weist das Verfahren die Merkmale auf:
- in Schritt II) wird das radikalisch vernetzbare Aufbaumaterial aus einem oder mehreren Druckköpfen, entsprechend dem jeweils ausgewählten Querschnitt des Vorläufers, aufgetragen und wird anschließend belichtet und/oder bestrahlt.

Somit wird gemäß dieser Ausführungsform das additive Fertigungsverfahren der Inkjet-Methode abgedeckt: es wird das vernetzbare Aufbaumaterial gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des vernetzbaren Aufbaumaterials kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 µm bis ≤ 2000 µm liegen.

In einer weiteren bevorzugten Ausführungsform umfasst die Herstellung der Hülle mittels des additiven Fertigungsverfahrens die Schritte:
- Auftragen einer Schicht aus das Aufbaumaterial aufweisenden Partikeln auf eine Zielfläche;
- Einwirken von Energie auf einen ausgewählten Teil der Schicht, entsprechend einem Querschnitt der Hülle, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um die Hülle zu bilden.

Gemäß dieser Ausführungsform handelt es sich um ein Pulversinter- oder Pulverschmelzverfahren. Es ist bevorzugt, dass mindestens 90 Gewichts-% der Partikel einen Teilchendurchmesser von ≤ 0.25 mm, bevorzugt ≤ 0.2 mm, besonders bevorzugt ≤ 0.15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt der Hülle, so dass die Partikel im ausgewählten Teil verbunden werden, den folgenden Schritt:
- Bestrahlen eines ausgewählten Teils der Schicht, entsprechend einem Querschnitt der Hülle, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gaslaser ausgeführt sein. Denkbar ist auch ein Elektronenstrahl.

In einer weiteren bevorzugten Ausführungsform umfasst das Einwirken von Energie auf einen ausgewählten Teil der Schicht, entsprechend einem Querschnitt der Hülle, so dass die Partikel im ausgewählten Teil verbunden werden, die folgenden Schritte:
- Auftragen einer Flüssigkeit auf einen ausgewählten Teil der Schicht, entsprechend einem Querschnitt der Hülle, wobei die Flüssigkeit die Absorption von Energie in den von ihr kontaktierten Bereichen der Schicht relativ zu den nicht von ihr kontaktierten Bereichen erhöht;
- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren bevorzugten Ausführungsform umfasst die Herstellung der Hülle mittels des additiven Fertigungsverfahrens die Schritte:
- Auftragen einer Schicht aus das Aufbaumaterial aufweisenden Partikeln auf eine Zielfläche;
- Auftragen einer Flüssigkeit auf einen ausgewählten Teil der Schicht, entsprechend einem Querschnitt der Hülle, wobei die Flüssigkeit derart ausgewählt ist, dass sie in den von ihr kontaktierten Bereichen der Schicht durch Verkleben, Verschmelzen und/oder Anlösen die Partikel untereinander verbindet.
- Wiederholen der Schritte des Auftragens der Schicht und der Flüssigkeit, so dass die verbundenen Teile der benachbarten Schichten sich verbinden, um die Hülle zu bilden.

Diese Verfahrensform kann als sogenanntes "Binder Jetting"-Verfahren angesehen werden. Die Flüssigkeit kann dabei wie beschrieben in unterschiedlichster Weise mit der Pulverschicht in Kontakt treten und diese gezielt verfestigen.

Bevorzugte Aufbaumaterialien, die so verarbeitet werden, sind entweder anorganische Sande wie zum Beispiel SiO₂ oder Gips oder organische Polymere Pulver wie Polystyrol, Polyvinylchlorid, Polymethylmethacrylat und Polyurethan.

In einer weiteren bevorzugten Ausführungsform umfasst die Herstellung der Hülle mittels des additiven Fertigungsverfahrens die Schritte:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt der Hülle entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt der Hülle entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis die Hülle gebildet ist.

Bei dieser Ausführungsform handelt es sich um ein Schmelzschichtungs- oder Fused Deposition Modeling (FDM)-Verfahren. Die einzelnen Filamente, welche aufgetragen werden, können einen Durchmesser von ≥ 30 µm bis ≤ 2000 µm aufweisen, bevorzugt ≥ 40 µm bis ≤ 1000 µm und besonders bevorzugt ≥ 50 µm bis ≤ 500 µm.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird.

In einer weiteren bevorzugten Ausführungsform reagiert die Reaktionsmischung zu einem Schaum mit einer Druckfestigkeit bei 10% Stauchung (DIN EN 826) von ≥ 50 kPa, bevorzugt ≥ 95 kPa bis ≤ 800 kPa oder zu einem Schaum mit einer Stauchhärte bei 40% Kompression (ISO 3386-1) von ≤ 15 kPa, bevorzugt ≤ 12 kPa, ganz besonders bevorzugt ≥ 1 kPa bis ≤ 10 kPa.

Die erfindungsgemäß bevorzugten Schäume haben eine Rohdichte (ISO 845) von ≤ 300 g/l, besonders bevorzugt ≤ 200 g/l und besonders bevorzugt ≤ 100 g/l.

In einer weiteren bevorzugten Ausführungsform umfasst die Polyolkomponente ein difunktionelles Polyetherpolyol und/oder ein difunktionelles Polyesterpolyol und/oder ein difunktionelles Polyethercarbonatpolyol.

Vorzugsweise ist das difunktionelle Polyetherpolyol ein Polyoxyalkylenpolyol mit einer Hydroxylzahl (DIN 53240) von ≥ 150 bis ≤ 550 mg KOH/g. Es kann weiterhin beispielsweise in einem Anteil von ≥ 3 bis ≤ 25 Gew.-%, bevorzugt ≥ 5 bis ≤ 20 Gew.-%, bezogen auf das Gesamtgewicht der Polyolkomponente, eingesetzt werden.

Es ist weiterhin bevorzugt, dass das difunktionelle Polyesterpolyol eine Hydroxylzahl (DIN 53240) von ≥ 200 bis ≤ 500 mg KOH/g aufweist.

Ein Beispiel für eine im erfindungsgemäßen Verfahren einsetzbare Reaktionsmischung enthält die nachfolgend wiedergegebene Polyisocyanatkomponente A) und/oder Polyolkomponente B), welche auch in der Patentanmeldung EP 2 784 100 A1 beschrieben werden:
Polyisocyanatkomponente A) umfassend:
   A1) 0 bis 10 Gew.-%, bevorzugt 0,1 bis 8 Gew.-%, besonders bevorzugt 0,1 - 5 Gew.-%, bezogen auf die organische Polyisocyanatkomponente A), 2,2'-Diphenylmethandiisocyanat,
   A2) 0 bis 30 Gew.-%, bevorzugt 10 bis 25 Gew.-%, bezogen auf die organische Polyisocyanatkomponente A), 2,4'-Diphenylmethandiisocyanat und
   A3) 25 bis 75 Gew.-%, bevorzugt 35 bis 55 Gew.-%, bezogen auf die Polyisocyanatkomponente A), 4,4'-Diphenylmethandiisocyanat
Polyolkomponente B) umfassend:
   B1) 20 bis 70 Gew.-%, bevorzugt 25 bis 45 Gew.-%, bezogen auf die Komponente B, Polyoxyalkylenpolyolen mit einer Hydroxylzahl von 25 bis 60 mg KOH/g und einer zahlenmittleren Funktionalität von 2 bis 4,
   B2) 20 bis 50 Gew.-%, bezogen auf die Komponente B, Polyoxypropylenpolyolen mit einer Hydroxylzahl von 300 bis 900 mg KOH/g und einer zahlenmittleren Funktionalität von 2,5 bis 4,
   B3) 0 bis 25 Gew.-%, bevorzugt 5 bis 20 Gew.-%, bezogen auf die Komponente B, Polyoxyalkylenpolyolen mit einer Hydroxylzahl von 150 bis 550 mg KOH/g und einer Funktionalität von 2,
   B4) 0 bis 20 Gew.-%, bezogen auf die Komponente B, Estergruppen-haltige Polyole mit einer Hydroxylzahl von 200 bis 500 mg KOH/g und einer zahlenmittleren Funktionalität von 2 bis 5,
   B5) 0,1 bis 15 Gew.-%, bevorzugt 0,1 bis 5 Gew.-%, bezogen auf die Komponente B, Propylenoxid-Ethylenoxid-Copolymere mit einer Hydroxylzahl von 25 bis 200 mg KOH/g und einer Funktionalität von 5 bis 8, bevorzugt 6,
   B6) 0 bis 3 Gew.-%, bezogen auf die Komponente B, Glycerin
   B7) 1 bis 7 Gew.-%, bevorzugt 4 bis 6,5 Gew.-%, besonders bevorzugt 5,6 bis 6,6 Gew.-%, bezogen auf die Komponente B, Wasser,
   B8) 0,5 bis 4 Gew.-%, bezogen auf die Komponente B, Katalysatoren
   B9) gegebenenfalls Hilfs- und/oder Zusatzmittel,
   wobei die NCO-Kennzahl (Verhältnis der Anzahl der NCO-Gruppen zu der Anzahl der NCO-reaktiven Gruppen multipliziert mit 100) 85 bis 125, bevorzugt 100 bis 120 beträgt und die Summe der Komponenten B1) bis B9) 100 Gew.-% beträgt.

Als Polyisocyanat-Komponente werden vorzugsweise Mischungen aus 4,4'-, 2,4'- und 2,2'-Diphenylmethandiisocyanaten und Polyphenyl-polymethylen-polyisocyanaten (Roh-MDI) eingesetzt. Besonders bewährt haben sich Roh-MDI-Typen mit einem Diphenylmethandiisocyanat-Isomerengehalt von 50 bis 70 Gew.-%.

Als Komponente B1) werden bevorzugt Polyoxyalkylenpolyole im Hydroxylzahlbereich von 25 bis 40 mg KOH/g verwendet, die vorzugsweise durch Umsetzung von Ethylenoxid und/oder Propylenoxid mit dreiwertigen Polyolen, wie z.B. Glycerin, Trimethylolpropan oder mit zweiwertigen Polyolen, wie z.B. Ethylenglycol, Wasser, 1,2-Propylenglycol, Neopentylglycol, Bisphenolen, und anderen zugänglich sind.

Als Komponente B2) werden vorzugsweise Polyoxyalkylenpolyole im Hydroxylzahlbereich von 380 bis 650 mg KOH/g verwendet, die vorzugsweise durch Umsetzung von Ethylenoxid und/oder Propylenoxid mit Polyolen, wie z.B. Glycerin, Trimethylolpropan, Triethanolamin, Ethylendiamin, ortho-Toluyldiamin, Mischungen aus Zucker und/oder Sorbit mit Glycolen u.a. zugänglich sind.

Als Komponente B3) werden difunktionelle Polyoxyalkylenpolyole im Hydroxylzahlbereich von 150 bis 550 verwendet, die bevorzugt durch Umsetzung von Ethylenoxid und/oder Propylenoxid mit Glycolen, wie z.B. Ethylen-, Diethylen-, 1,2- oder 1,3-Propylenglycol, 1,4-Butandiol, Neopentylglycol, Bisphenolen- und anderen zugänglich sind.

Als Komponente B4) finden bevorzugt Estergruppen-haltige Polyole im Hydroxylzahlbereich von 200 bis 500 mg KOH/g Verwendung, die bevorzugt durch Veresterung von Phthalsäureanhydrid, Terephthalsäure, Isophthalsäure, Glutar-, Bernstein-, und/oder Adipinsäure mit Ethylen-, Diethylen-, Propylenglycol, Butandiol, Hexandiol, Trimethylolpropan, Glyzerin und anderen hergestellt werden können. Besonders bevorzugt ist die Verwendung eines Umsetzungsproduktes aus Phthalsäureanhydrid, Diethylenglycol und Ethylenoxid.

Als Komponente B5) werden bevorzugt hexafunktionelle Propylenoxid-Ethylenoxid-Copolymere im Hydroxylzahlbereich von 25 bis 200 verwendet, die vorzugsweise durch Umsetzung von Ethylenoxid und Propylenoxid mit Sorbit und seinen Isomeren zugänglich sind. Besonders bevorzugt ist ein Anteil von ≥ 10 Gew.-% Ethylenoxideinheiten, bezogen auf (B5).

Zu den Katalysatoren (B8) gehören Verbindungen, die die Reaktion zur Herstellung des Schaumes beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat, Wismut- und Zinksalze sowie tertiäre Amine wie Triethylamin, Tributylamin, Dimethylcyclohexylamin, Dimethylbenzylamin, N-Methyl-imidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diazabicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-ammonium-formiat, N,N,N-Trimethyl-N-(2-hydroxy-propyl)-ammonium-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Bevorzugt werden gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol, 2-((Dimethylamino)ethyl)methylaminopropanol, 1,1'-((3-(Dimethylamino)propyl)imino)bis-2-propanol und/oder die in EP-A 0 629 607 beschriebenen Umsetzungsprodukte aus Acetessigsäureethylester, Polyetherpolyolen und 1-(Dimethylamino)-3-amino-propan sowie insbesondere das Tallölsäure-Amidsalz des N,N-Dimethylaminopropylamins verwendet.

Als Hilfs- und/oder Zusatzmittel B9) können beispielsweise Farbmittel, Schaumstabilisatoren, anorganische Füllstoffe, Emulgatoren, Zellöffner und Flammschutzmittel verwendet werden.

Als Schaumstabilisatoren eignen sich beispielsweise Siloxan-Polyoxyalkylen-Copolymere, Organopolysiloxane, ethoxylierte Fettalkohole und Alkylphenole, Fettsäure-basierte Aminoxide und Betaine und Ricinusöl- bzw. Ricinolsäureester.

Als Zellöffner wirken beispielweise Paraffine, Polybutadiene, Fettalkohole und gegebenenfalls Polyalkylenoxid-modifizierte Dimethylpolysiloxane.

Weitere Beispiele von gegebenenfalls erfindungsgemäß mit zu verwendenden Hilfs- und/oder Zusatzmitteln B9) sind Emulgatoren, Reaktionsverzögerer, Stabilisatoren gegen Alterungs- und Witterungseinflüsse, Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe. Als Emulgatoren seien beispielsweise genannt ethoxylierte Alkylphenole, Alkalimetallsalze von Fettsäuren, Alkalimetallsalze von sulfatierten Fettsäuren, Alkalimetallsalze von Sulfonsäuren und Salze von Fettsäuren und Aminen.

Nähere Angaben über Verwendungs- und Wirkungsweise der oben genannten Hilfs- und/oder Zusatzmittel sind z.B. im Kunststoff-Handbuch, Polyurethane, Band VII, Carl Hanser Verlag, München, Wien, 2. Auflage, 1983 beschrieben.

Der Schaumstoff kann durch Vermischen der Polyolformulierung mit der Polyisocyanat-Komponente, in der Regel in den Gew.-Verhältnissen von 100:150 bis 100:200, hergestellt werden. Üblicherweise erfolgt diese Vermischung mittels einer Niederdruck-Schäummaschine.

Ein spezielles Beispiel (Beispiel 1 aus EP 2 784 100 A1) für eine erfindungsgemäß einsetzbare Polyolkomponente B) ist eine Mischung umfassend:
- 30,0 Gew.-Teilen Polyetheralkohol (B1) auf Basis Glycerin/ Propylenoxid/ Ethylenoxid, OH-Zahl 28 mg KOH/g, Funktionalität 3,
- 34,0 Gew.-Teilen Polyetheralkohol (B2) auf Basis Trimethylolpropan/Propylenoxid, OH-Zahl 550 mg KOH/g, Funktionalität 3,
- 15,0 Gew.-Teilen Polyesteretheralkohol (B4) auf Basis Phthalsäureanhydrid/Diethylenglycol/Ethylenoxid, OH-Zahl 300 mg KOH/g, Funktionalität 2,
- 12,0 Gew.-Teilen Polyetheralkohol (B3) auf Basis Propylenglycol/ Propylenoxid, OH-Zahl 512 mg KOH/g, Funktionalität 2,
- 0,50 Gew.-Teilen Polyoxyalkylenpolyolen (B5), auf Basis Sorbit/ Propylenoxid/ Ethylenoxid, OH-Zahl 100 mg KOH/g und einer Funktionalität von 6
- 6,40 Gew.-Teilen Wasser (B7)
- 1,80 Gew.-Teilen eines wie in EP 0629607 A2 beschriebenen Umsetzungsproduktes aus Acetessigsäureethylester, Polyetherpolyolen und 1-(Dimethylamino)-3-amino-propan mit einer Funktionalität von ca. 2-3 und einer OH-Zahl von 111 mg KOH/g (B8)
- 0,30 Gew.-Teilen Silikon-Schaumstabilisator (Niax^{®} Silicone SR 234 von Momentive Performance Materials) (B9),

Diese Polyolkomponente kann beispielsweise (Beispiel 1 aus EP 2 784 100 A1) mit der folgenden Isocyanatkomponente A) umgesetzt werden:
- 182 Gew.-Teile eines technischen Isocyanates mit einem Anteil von ca. 14 Gew.-%, bezogen auf organische Polyisocyanatkomponente A), 2,4'-Diphenylmethandiisocyanat und von ca. 45 Gew.-%, bezogen auf organische Polyisocyanatkomponente A), 4,4'-Diphenylmethandiisocyanat, und einem NCO-Gehalt von 31,8 Gew.-%

Wie in Beispiel 1 aus EP 2 784 100 A1 dokumentiert können hieraus hergestellte Schaumblöcke die folgenden durchschnittlichen Eigenschaften aufweisen: Rohdichte (DIN 53420) 23.0 kg/m³; Druckfestigkeit (10% Stauchung, DIN EN 826) 98 kPa und Bruchdehnung (DIN 53430) 19%.

Ein weiteres spezielles Beispiel (Beispiel 2 aus EP 2 784 100 A1) für eine erfindungsgemäß einsetzbare Polyolkomponente B) ist eine Mischung umfassend:
- 30,0 Gew.-Teilen Polyetheralkohol (B1) auf Basis Glycerin/ Propylenoxid/ Ethylenoxid, OH-Zahl 28 mg KOH/g, Funktionalität 3,
- 34,2 Gew.-Teilen Polyetheralkohol (B2) auf Basis Trimethylolpropan/Propylenoxid, OH-Zahl 550 mg KOH/g, Funktionalität 3,
- 15,0 Gew.-Teilen Polyesteretheralkohol (B4) auf Basis Phthalsäureanhydrid/Diethylenglycol/-Ethylenoxid, OH-Zahl 310 mg KOH/g, Funktionalität 2,
- 12,0 Gew.-Teilen Polyetheralkohol (B3) auf Basis Propylenglycol/ Propylenoxid, OH-Zahl 512 mg KOH/g, Funktionalität 2,
- 0,30 Gew.-Teilen Polyoxyalkylenpolyolen (B5), auf Basis Sorbit/ Propylenoxid/ Ethylenoxid, OH-Zahl 100 mg KOH/g, Funktionalität von 6
- 1,9 Gew.-Teilen Umsetzungsprodukt aus Acetessigsäureethylester, einem Polyetheralkohol auf Basis Trimethylolpropan/Propylenoxid (OH-Zahl 550 mg KOH/g) und 1-(Dimethylamino)-3-amino-propan analog EP 0 629 607 (B8)
- 0,30 Gew.-Teilen Silikon-Schaumstabilisator (Niax^{®} Silicone SR 234 von Momentive Performance Materials) (B9),
- 5,8 Gew.-Teilen Wasser (B7)

Diese Polyolkomponente kann beispielsweise (Beispiel 2 aus EP 2 784 100 A1) mit der folgenden Isocyanatkomponente A) umgesetzt werden:
- 172 Gew.-Teile eines technischen Isocyanates mit einem Anteil von ca. 21 Gew.-%, bezogen auf organische Polyisocyanatkomponente A), 2,4'-Diphenylmethandiisocyanat und von ca. 44 Gew.-%, bezogen auf organische Polyisocyanatkomponente A), 4,4'-Diphenylmethandiisocyanat, und einem NCO-Gehalt von ca. 31,9 Gew.-%

Wie in Beispiel 1 aus EP 2 784 100 A1 dokumentiert können hieraus hergestellte Schaumblöcke die folgenden durchschnittlichen Eigenschaften aufweisen: Rohdichte (DIN 53420) 24.2 kg/m³; Druckfestigkeit (10% Stauchung, DIN EN 826) 97 kPa und Bruchdehnung (DIN 53430) 19.83%.

In einer weiteren bevorzugten Ausführungsform umfasst die Polyolkomponente ein Treibmittel, welches eine Mischung aus Wasser und mindestens einem physikalischen Treibmittel ist.

In einer weiteren bevorzugten Ausführungsform wird die Reaktionsmischung ohne Unterbrechung in dem Volumen bereitgestellt. Das Einbringen ohne Unterbrechung ließe sich somit als "one shot"-Verfahren charakterisieren.

In einer weiteren bevorzugten Ausführungsform umschließt die in dem additiven Herstellungsverfahren hergestellte Hülle das Volumen in teilweise unterbrochener Form. So kann die Hülle eine Öffnung für das Einfüllen der Reaktionsmischung aufweisen, wobei diese Öffnung eine Fläche (bezogen auf die Gesamtoberfläche der additiv gefertigten Hülle) von ≤ 10%, bevorzugt ≤ 5% und besonders bevorzugt ≤ 3% aufweist.

In einer weiteren bevorzugten Ausführungsform umschließt die in dem additiven Herstellungsverfahren hergestellte Hülle das Volumen ohne Unterbrechung. Somit ist die Hülle eine vollständig geschlossene Hülle. Das Einführen der Reaktionsmischung kann durch Injektion mittels einer Injektionskanüle durch die Hülle hindurch erfolgen.

In einer weiteren bevorzugten Ausführungsform umfasst die in den additiven Herstellungsverfahren hergestellte Hülle einen oder mehrere temporär sich öffenbare Abschnitte, welche eingerichtet sind, um im Volumen aufgebauten Gas-Überdruck abzulassen. Solche Abschnitte können in Form von Ventilen vorliegen, deren Integration in die Hülle angesichts der Tatsache, dass die Hülle durch ein additives Fertigungsverfahren hergestellt wurde, keine Schwierigkeiten bereiten dürfte. Besonders geeignet sind sogenannte Entenschnabelventile. Solche öffenbare Abschnitte können dazu beitragen, dass während des Aufschäumens der Reaktionsmischung unter Freisetzung von gasförmigem Treibmittel der Innendruck in geschlossenen Volumina nicht so stark ansteigt, dass die Hülle aufplatzt. Im Zuge einer Nachbehandlung können diese Abschnitte nach Herstellung des Gegenstands auch mechanisch entfernt werden.

Die Erfindung betrifft weiterhin einen Gegenstand, erhältlich durch ein erfindungsgemäßes Verfahren, umfassend eine Hülle, welche ein innerhalb der Hülle befindliches Volumen definiert und einen das Volumen ganz oder teilweise ausfüllenden Schaum, wobei die Hülle ein thermoplastisches Polyurethanpolymer umfasst, der Schaum einen Polyurethanschaum mit einer Druckfestigkeit bei 10% Stauchung (DIN EN 826) von ≥ 50 kPa, bevorzugt ≥ 95 kPa bis ≤ 800 kPa oder einer Stauchhärte bei 40% Kompression (ISO 3386-1) von ≤ 15 kPa, bevorzugt ≤ 12 kPa, ganz besonders bevorzugt ≥ 1 kPa bis ≤ 10 kPa umfasst und der Schaum und die Hülle zumindest teilweise stoffschlüssig miteinander verbunden sind.

Das eingefüllte Volumen kann beispielsweise ≥ 1 cm³ bis ≤ 5000 cm³ betragen.

In einer bevorzugten Ausführungsform des Gegenstands umfasst die Hülle temporär sich öffenbare Abschnitte, welche eingerichtet sind, um im Volumen aufgebauten Gas-Überdruck abzulassen. Solche Abschnitte können in Form von Ventilen vorliegen, deren Integration in die Hülle angesichts der Tatsache, dass die Hülle durch ein additives Fertigungsverfahren hergestellt wurde, keine Schwierigkeiten bereiten dürfte. Besonders geeignet sind sogenannte Entenschnabelventile. Solche öffenbare Abschnitte können dazu beitragen, dass während des Aufschäumens der Reaktionsmischung unter Freisetzung von gasförmigem Treibmittel der Innendruck in geschlossenen Volumina nicht so stark ansteigt, dass die Hülle aufplatzt. Im Zuge einer Nachbehandlung können diese Abschnitte nach Herstellung des Gegenstands auch mechanisch entfernt werden.

In einer weiteren bevorzugten Ausführungsform des Gegenstands umfasst die Hülle in das Volumen hineinragende Elemente. Auf diese Weise kann eine strukturelle Verstärkung des Gegenstands erreicht werden.

In einer weiteren bevorzugten Ausführungsform des Gegenstands ist der Gegenstand ein Ball. Der Ball wird vorzugsweise als Spiel- oder Sportgerät eingesetzt, beispielsweise als Fußball, Basketball, Handball, Tennisball, Schlagball oder dergleichen. Solch ein Ball kann auch von der Hülle in das Volumen hineinragende Elemente aufweisen. Der Ball weist vorzugsweise eine geschlossene Hülle auf und als Füllung einen Schaum mit einer Rohdichte (ISO 845) von ≤ 100 g/l und eine Druckfestigkeit bei 10% Stauchung (DIN EN 826) von ≥ 50 kPa auf. Dann ist der Schaum als harter elastischer Schaum anzusehen.

### Beschreibung der Figuren

Figur 1 zeigt eine Unteransicht der 3D-gedruckten Hülle (4) eines erfindungsgemäßen Gegenstandes (10) gemäß Beispiel 1 aus drei ineinander verschlungenen Elementen (2, 2', 2") mit Wänden (1) und den hiervon eingeschlossenen mit Polymer gefüllten Volumen (3, 3', 3").
Figur 2 zeigt eine Seitenansicht der Form aus Beispiel 1 aus drei ineinander verschlungenen Elementen (2, 2', 2").
Figur 3 zeigt eine Aufsicht der Form aus Beispiel 1 aus drei ineinander verschlungenen Elementen (2, 2', 2").

### Beispiele

### Erfindungsgemäßes Beispiel 1

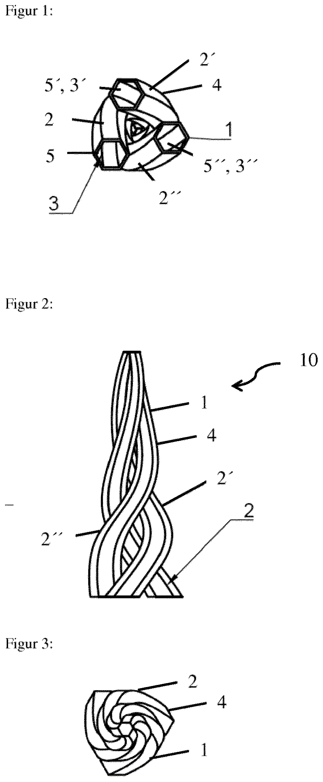

Ein erfindungsgemäßer Gegenstand 10 wurde hergestellt, indem zunächst eine Hülle 4 additiv gefertigt und anschließend diese mit einer Reaktionsmischung ausgefüllt wurde. Die Hülle 4 wurde dabei im SLA-Verfahren hergestellt. Das dabei verwendete UV-reaktive Harz war das Photopolymer Resin Greay FLGPGR03 vom Hersteller Formlabs und wurde im SLA-Drucker Form 2 vom Hersteller Formlabs verarbeitet. Die Hülle bildet dabei eine Form aus drei ineinander verschlungenen, hohlen Elementen (2, 2', 2") mit einer Wandstärke von 2 mm. Die Elemente (2, 2', 2") waren nach unten hin offen, um das Befüllen mit Polymer zu ermöglichen, wie in Figur 1 dargestellt. Nach Drucken und Entfernen von anhaftendem flüssigen Photopolymer wurde in diese Hülle eine Reaktionsmischung gefüllt, um einen Gegenstand 10 wie in Figur 2 gezeigt zu erhalten. Figur 3 zeigt eine Aufsicht auf den erfindungsgemäßen Gegenstand 10. Die in den Figuren 1 bis 3 gezeigten Gegenstände 10 sind jedoch nur beispielhaft und können jede mit 3D Druck erzielte Form aufweisen.

Als Reaktionsmischung für das Polymer zur Füllung der hohlen Elemente (2, 2', 2") wurde zunächst ein Prepolymer aus 51 Gew.-% Methylendiphenylisocyanat, 29 Gew.-% trifunktionellen Polypropylenpolyetherpolyols mit einer Hydroxyzahl von 35, 18 Gew.-% eines linearen Polypropylenpolyetherpolyols mit einer Hydroxyzahl von 28, 1 Gew.-% Paratoluolsulfonylisocyanat, 0,6 Gew.-% eines polyethermodifizierten Polysiloxanes als Schaumstabilisator (Tegostab B 1903 bezogen von der Evonik Industries AG) und 0,4 Gew.-% Dibutylzinndilaurat als Katalysator. 25 g dieses Prepolymers wurden mit 2,5 g Wasser als chemischem Treibmittel zu einer Prepolymermischung gemischt und zügig innerhalb von 2 bis 3 Minuten mit einem Holzspachtel verrührt. Unmittelbar danach wurde die Prepolymermischung in die additiv hergestellte Hülle 4 gegossen, um den Gegenstand 10, wie in Figuren 2 und 3 gezeigt zu erhalten. Die Prepolymermischung hat eine Trocknungszeit von 3 h, ermittelt in einem Feuchtehärtungssystem bei 23 °C und 50% relativer Feuchte.

Nach 24 h wurde der überschüssige Schaum an den Öffnungen 5, 5', 5" mit einem scharfen Messer entfernt. Somit erhält man einen erfindungsgemäßen Gegenstand 10 aus einer additiv hergestellten Hülle 4, die vollständig mit einem Polymer ausgeschäumt ist. Die Hülle 4 und das ausgehärtete Polymer sind dabei auf eine Weise miteinander verbunden, die wenig Spannung zwischen der Hülle 4 und dem in dem Volumen 3, 3', 3", das die Hülle 4 gebildet aus den Wänden 1 umschließt, aufweist. Der Gegenstand 10 weist aufgrund dieses festen Formschlusses eine hohe Stabilität auf. Die Hülle 4 und das Polymer sind dabei fest miteinander verbunden sodass sie sich bevorzugt nicht ohne Zerstörung des Gegenstandes 10 wieder voneinander trennen lassen. Auf diese Weise können geometrisch komplexe und dabei voluminöse Strukturen sehr schnell erzeugt werden, die ohne 3D Druck nicht herstellbar wären. Gleichzeitig wäre eine Herstellung des kompletten Gegenstandes in einem 3D Druck Verfahren extrem zeitaufwendig. Es besteht zudem eine hohe Flexibilität in der Auswahl und Kombination der Eigenschaften der Materialien der Hülle sowie des Polymers, was eine kostengünstige Herstellung verschiedenster Geometrien in Kombination mit unterschiedlichsten Materialeigenschaften ermöglicht.

## Patentansprüche

1. Verfahren zur Herstellung eines Gegenstands (10), umfassend die Schritte:
- Herstellen einer Hülle (4), welche ein Volumen (3, 3', 3") zur Aufnahme eines Fluids umfasst, mittels eines additiven Herstellungsverfahrens aus einem Aufbaumaterial;
- Bereitstellen einer Reaktionsmischung umfassend eine Polyisocyanatkomponente und eine Polyolkomponente in dem Volumen (3, 3', 3");
- Reagierenlassen der Reaktionsmischung in dem Volumen (3, 3', 3"), so dass ein wenigstens teilweise in dem Volumen (3, 3', 3") vorliegendes Polymer erhalten wird,
**dadurch gekennzeichnet, dass**
die Reaktionsmischung eine Abbindezeit von ≥ 2 Minuten aufweist.

2. Verfahren gemäß Anspruch 1, **dadurch gekennzeichnet, dass** das Aufbaumaterial radikalisch vernetzbar ist sowie Gruppen mit Zerewitinoff-aktiven H-Atomen umfasst, dass die Hülle (4) aus einem Vorläufer erhalten wird und dass das Verfahren die Schritte umfasst:
I) Abscheiden von radikalisch vernetztem Aufbaumaterial auf einem Träger, so dass eine Lage eines mit dem Träger verbundenen Aufbaumaterials erhalten wird, welche einem ersten ausgewählten Querschnitt des Vorläufers entspricht;
II) Abscheiden von radikalisch vernetztem Aufbaumaterial auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden von radikalisch vernetztem Aufbaumaterial wenigstens in Schritt II) durch Belichten und/oder Bestrahlen eines ausgewählten Bereichs eines radikalisch vernetzbaren Aufbaumaterials, entsprechend dem jeweils ausgewählten Querschnitt des Vorläufers, erfolgt und
wobei das radikalisch vernetzbare Aufbaumaterial eine Viskosität, gemessen bei 23°C gemäß DIN EN ISO 2884-1, von ≥ 5 mPas bis ≤ 100000 mPas aufweist,
wobei das radikalisch vernetzbare Aufbaumaterial eine härtbare Komponente umfasst, in der NCO-Gruppen und olefinische C=C-Doppelbindungen vorliegen
und dass nach Schritt III) weiterhin Schritt IV) durchgeführt wird:
IV) Erwärmen des nach Schritt III) erhaltenen Vorläufers auf eine Temperatur von ≥ 50 °C, so dass die Hülle (4) erhalten wird.

3. Verfahren gemäß Anspruch 2, **dadurch gekennzeichnet, dass**:
- der Träger innerhalb eines Behälters angeordnet ist und vertikal in Schwerkraftrichtung absenkbar ist,
- der Behälter das radikalisch vernetzbare Aufbaumaterial in einer Menge enthält, welche ausreicht, um wenigstens den Träger und eine in vertikaler Richtung gesehenen obersten Oberfläche von auf dem Träger abgeschiedenem vernetztem Aufbaumaterial zu bedecken,
- vor jedem Schritt II) der Träger um eine vorbestimmte Strecke abgesenkt wird, so dass über der in vertikaler Richtung gesehen obersten Lage des vernetzten Aufbaumaterials sich eine Schicht des radikalisch vernetzbaren Aufbaumaterials bildet und
- in Schritt II) ein Energiestrahl den ausgewählten Bereich der Schicht des radikalisch vernetzbaren Aufbaumaterials, entsprechend dem jeweils ausgewählten Querschnitt des Vorläufers, belichtet und/oder bestrahlt.

4. Verfahren gemäß Anspruch 2, **dadurch gekennzeichnet, dass**:
- der Träger innerhalb eines Behälters angeordnet ist und vertikal entgegen der Schwerkraftrichtung anhebbar ist,
- der Behälter das radikalisch vernetzbare Aufbaumaterial bereitstellt,
- vor jedem Schritt II) der Träger um eine vorbestimmte Strecke angehoben wird, so dass unter der in vertikaler Richtung gesehen untersten Lage des vernetzten Aufbaumaterials sich eine Schicht des radikalisch vernetzbaren Aufbaumaterials bildet und
- in Schritt II) eine Mehrzahl von Energiestrahlen den ausgewählten Bereich der Schicht des radikalisch vernetzbaren Aufbaumaterials, entsprechend dem jeweils ausgewählten Querschnitt des Vorläufers, gleichzeitig belichtet und/oder bestrahlt.

5. Verfahren gemäß Anspruch 2, **dadurch gekennzeichnet, dass**:
- in Schritt II) das radikalisch vernetzbare Aufbaumaterial aus einem oder mehreren Druckköpfen, entsprechend dem jeweils ausgewählten Querschnitt des Vorläufers, aufgetragen wird und anschließend belichtet und/oder bestrahlt wird.

6. Verfahren gemäß Anspruch 1, **dadurch gekennzeichnet, dass** die Herstellung der Hülle (4) mittels des additiven Fertigungsverfahrens die Schritte umfasst:
- Auftragen einer Schicht aus das Aufbaumaterial aufweisenden Partikeln auf eine Zielfläche;
- Einwirken von Energie auf einen ausgewählten Teil der Schicht, entsprechend einem Querschnitt der Hülle (4), so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um die Hülle (4) zu bilden.

7. Verfahren gemäß Anspruch 1, **dadurch gekennzeichnet, dass** die Herstellung der Hülle (4) mittels des additiven Fertigungsverfahrens die Schritte umfasst:
- Auftragen einer Schicht aus das Aufbaumaterial aufweisenden Partikeln auf eine Zielfläche;
- Auftragen einer Flüssigkeit auf einen ausgewählten Teil der Schicht, entsprechend einem Querschnitt der Hülle (4), wobei die Flüssigkeit derart ausgewählt ist, dass sie in den von ihr kontaktierten Bereichen der Schicht durch Verkleben, Verschmelzen und/oder Anlösen die Partikel untereinander verbindet.
- Wiederholen der Schritte des Auftragens der Schicht und der Flüssigkeit, so dass die verbundenen Teile der benachbarten Schichten sich verbinden, um die Hülle (4) zu bilden.

8. Verfahren gemäß Anspruch 1, **dadurch gekennzeichnet, dass** die Herstellung der Hülle (4) mittels des additiven Fertigungsverfahrens die Schritte umfasst:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt der Hülle (4) entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt der Hülle (4) entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis die Hülle (4) gebildet ist.

9. Verfahren gemäß einem der Ansprüche 1 bis 8, **dadurch gekennzeichnet, dass** die Reaktionsmischung zu einem Schaum mit einer Druckfestigkeit bei 10% Stauchung, gemessen gemäß DIN EN 826, von ≥ 50 kPa oder zu einem Schaum mit einer Stauchhärte bei 40% Kompression, gemessen gemäß ISO 3386-1, von ≤ 15 kPa reagiert.

10. Verfahren gemäß einem der Ansprüche 1 bis 9, **dadurch gekennzeichnet, dass** die Polyolkomponente ein difunktionelles Polyetherpolyol und/oder ein difunktionelles Polyesterpolyol und/oder ein difunktionelles Polyethercarbonatpolyol umfasst.

11. Verfahren gemäß einem der Ansprüche 1 bis 10, **dadurch gekennzeichnet, dass** die Polyolkomponente ein Treibmittel umfasst, welches eine Mischung aus Wasser und mindestens einem physikalischen Treibmittel ist.

12. Verfahren gemäß einem der Ansprüche 1 bis 11, **dadurch gekennzeichnet, dass** die Reaktionsmischung ohne Unterbrechung in dem Volumen (3, 3', 3") bereitgestellt wird.

13. Gegenstand (10), erhältlich durch ein Verfahren gemäß einem der Ansprüche 1 bis 12, umfassend eine Hülle (4), welche ein innerhalb der Hülle (4) befindliches Volumen (3, 3', 3") definiert und einen das Volumen (3, 3', 3") ganz oder teilweise ausfüllenden Schaum,
**dadurch gekennzeichnet, dass**
die Hülle (4) ein thermoplastisches Polyurethanpolymer umfasst, der Schaum einen Polyurethanschaum mit einer Druckfestigkeit bei 10% Stauchung, gemessen gemäß DIN EN 826, von > 50 kPa oder einer Stauchhärte bei 40% Kompression, gemessen gemäß ISO 3386-1, von ≤ 15 kPa umfasst und der Schaum und die Hülle (4) zumindest teilweise stoffschlüssig miteinander verbunden sind.

14. Gegenstand (10) gemäß Anspruch 13, **dadurch gekennzeichnet, dass** die Hülle (4) in das Volumen (3, 3', 3") hineinragende Elemente umfasst.

15. Gegenstand (10) gemäß Anspruch 13 oder 14, **dadurch gekennzeichnet, dass** der Gegenstand (10) ein Ball ist.

## Claims

1. Method of producing an article (10), comprising the steps of:
- producing a shell (4) encompassing a volume (3, 3', 3") for accommodating a fluid by means of an additive manufacturing method from a construction material;
- providing a reaction mixture comprising a polyisocyanate component and a polyol component in the volume (3, 3', 3");
- allowing the reaction mixture to react in the volume (3, 3', 3") to obtain a polymer present at least in part in the volume (3, 3', 3"),
**characterized in that**
the reaction mixture has a setting time of ≥ 2 minutes.

2. Method according to Claim 1, **characterized in that** the construction material is free-radically crosslinkable and comprises groups having Zerewitinoff-active hydrogen atoms, **in that** the shell (4) is obtained from a precursor, and **in that** the method comprises the steps of:
I) depositing free-radically crosslinked construction material on a carrier to obtain a ply of a construction material bonded to the carrier which corresponds to a first selected cross section of the precursor;
II) depositing free-radically crosslinked construction material onto a previously applied ply of the construction material to obtain a further ply of the construction material which corresponds to a further selected cross section of the precursor and which is bonded to the previously applied ply;
III) repeating step II) until the precursor is formed;
wherein the depositing of free-radically crosslinked construction material at least in step II) is effected by exposure and/or irradiation of a selected region of a free-radically crosslinkable construction material corresponding to the respectively selected cross section of the precursor, and
wherein the free-radically crosslinkable construction material has a viscosity, measured at 23°C to DIN EN ISO 2884-1, of ≥ 5 mPas to ≤ 100 000 mPas,
wherein the free-radically crosslinkable construction material comprises a curable component in which there are NCO groups and olefinic C=C double bonds,
and **in that** step III) is followed by a further step IV):
IV) heating the precursor obtained by step III) to a temperature of ≥ 50°C to obtain the shell (4).

3. Method according to Claim 2, **characterized in that**
- the carrier is disposed within a vessel and is lowerable vertically in the direction of gravity,
- the vessel contains the free-radically crosslinkable construction material in an amount sufficient to cover at least the carrier and an uppermost surface of crosslinked construction material deposited on the carrier as viewed in vertical direction,
- before each step II) the carrier is lowered by a predetermined distance so that a layer of the free-radically crosslinkable construction material is formed above the uppermost ply of the crosslinked construction material as viewed in vertical direction and
- in step II) an energy beam exposes and/or irradiates the selected region of the layer of the free-radically crosslinkable construction material corresponding to the respectively selected cross section of the precursor.

4. Method according to Claim 2, **characterized in that**
- the carrier is disposed within a vessel and is liftable vertically counter to the direction of gravity,
- the vessel provides the free-radically crosslinkable construction material,
- before each step II) the carrier is lifted by a predetermined distance so that a layer of the free-radically crosslinkable construction material is formed below the lowermost ply of the crosslinked construction material as viewed in vertical direction and
- in step II) a multitude of energy beams simultaneously expose and/or irradiate the selected region of the layer of the free-radically crosslinkable construction material corresponding to the respectively selected cross section of the precursor.

5. Method according to Claim 2, **characterized in that**
- in step II) the free-radically crosslinkable construction material is applied from one or more print heads corresponding to the respectively selected cross section of the precursor and is subsequently exposed and/or irradiated.

6. Method according to Claim 1, **characterized in that** the production of the shell (4) by means of the additive manufacturing method comprises the steps of:
- applying a layer of particles including the construction material to a target surface;
- introducing energy into a selected portion of the layer corresponding to a cross section of the shell (4) to bond the particles in the selected portion;
- repeating the steps of applying and introducing energy for a multitude of layers to bond the bonded portions of the adjacent layers to form the shell (4).

7. Method according to Claim 1, **characterized in that** the production of the shell (4) by means of the additive manufacturing method comprises the steps of:
- applying a layer of particles including the construction material to a target surface;
- applying a liquid to a selected portion of the layer corresponding to a cross section of the shell (4), where the liquid is selected in such a way that it bonds the particles to one another in the regions of the layer with which it comes into contact by bonding, fusion and/or partial dissolution;
- repeating the steps of applying the layer and the liquid to bond the bonded portions of the adjacent layers to form the shell (4).

8. Method according to Claim 1, **characterized in that** the production of the shell (4) by means of the additive manufacturing method comprises the steps of:
- applying a filament of an at least partly molten construction material to a carrier to obtain a ply of the construction material corresponding to a first selected cross section of the shell (4);
- applying a filament of the at least partly molten construction material to a previously applied ply of the construction material to obtain a further ply of the construction material which corresponds to a further selected cross section of the shell (4) and which is bonded to the ply applied beforehand;
- repeating the step of applying a filament of the at least partly molten construction material to a previously applied ply of the construction material until the shell (4) has been formed.

9. Method according to any of Claims 1 to 8, **characterized in that** the reaction mixture reacts to form a foam having a compressive strength at 10% compression, measured to DIN EN 826, of ≥ 50 kPa or to form a foam having a compression hardness at 40% compression, measured to ISO 3386-1, of ≤ 15 kPa.

10. Method according to any of Claims 1 to 9, **characterized in that** the polyol component comprises a difunctional polyether polyol and/or a difunctional polyester polyol and/or a difunctional polyether carbonate polyol.

11. Method according to any of Claims 1 to 10, **characterized in that** the polyol component comprises a blowing agent which is a mixture of water and at least one physical blowing agent.

12. Method according to any of Claims 1 to 11, **characterized in that** the reaction mixture is provided in the volume (3, 3', 3") in an uninterrupted manner.

13. Article (10) obtainable by a method according to any of Claims 1 to 12, comprising a shell (4) that defines a volume (3, 3', 3") within the shell (4) and a foam that wholly or partly fills the volume (3, 3', 3"),
**characterized in that**
the shell (4) comprises a thermoplastic polyurethane polymer, the foam comprises a polyurethane foam having a compressive strength at 10% compression, measured to DIN EN 826, of ≥ 50 kPa or a compression hardness at 40% compression, measured to ISO 3386-1, of ≤ 15 kPa, and the foam and the shell (4) are at least partly cohesively bonded to one another.

14. Article (10) according to Claim 13, **characterized in that** the shell (4) comprises elements that project into the volume (3, 3', 3").

15. Article (10) according to Claim 13 or 14, **characterized in that** the article (10) is a ball.

## Revendications

1. Procédé de fabrication d'un objet (10), comprenant les étapes suivantes :
- fabrication d'une enveloppe (4) qui comprend un volume (3, 3', 3") pour réception d'un fluide, à l'aide d'un procédé de fabrication additive à partir d'un matériau de construction ;
- mise en place dans le volume (3, 3', 3") d'un mélange réactionnel comprenant un composant polyisocyanate et un composant polyol ;
- mise en réaction du mélange réactionnel dans le volume (3, 3', 3") de façon à obtenir un polymère au moins partiellement présent dans le volume (3, 3',3"),
**caractérisé en ce que** le mélange réactionnel présente un temps de prise ≥ 2 minutes.

2. Procédé selon la revendication 1, **caractérisé en ce que** le matériau de construction est réticulable par voie radicalaire et comprend également des groupes ayant des atomes d'hydrogène actifs selon Zerewitinoff, **en ce que** l'enveloppe (4) est obtenue à partir d'un précurseur, et **en ce que** le procédé comprend les étapes suivantes :
I) dépôt d'un matériau de construction réticulable par voie radicalaire sur un support de façon à obtenir une couche d'un matériau de construction lié au support, qui correspond à une première section transversale sélectionnée du précurseur ;
II) dépôt du matériau de construction réticulable par voie radicalaire sur une couche appliquée au préalable du matériau de construction, de façon à obtenir une autre couche de matériau de construction, qui correspond à une autre section transversale sélectionnée du précurseur et qui est liée à la couche précédemment appliquée ;
III) répétition de l'étape II) jusqu'à formation du précurseur ;
dans lequel le dépôt du matériau de construction réticulable par voie radicalaire a lieu au moins dans l'étape II) par éclairement et/ou irradiation d'une zone sélectionnée d'un matériau de construction réticulable par voie radicalaire, correspondant à la section transversale choisie dans chaque cas du précurseur, et
dans lequel le matériau de construction réticulable par voie radicalaire présente une viscosité, mesurée à 23 °C selon DIN EN ISO 2884-1, de ≥ 5 mPa.s à ≤ 100 000 mPa.s,
le matériau de construction réticulable par voie radicalaire comportant un composant durcissable dans lequel se trouvent des groupes NCO et des doubles liaisons C=C oléfiniques, et **en ce qu'**on procède en outre après l'étape III) à une étape IV) :
IV) chauffage du précurseur obtenu dans l'étape III) à une température
≥ 50 °C de façon à obtenir l'enveloppe (4).

3. Procédé selon la revendication 2, **caractérisé en ce que**
- le support est disposé à l'intérieur d'un récipient et peut être abaissé verticalement dans la direction de la gravité,
- le récipient contient le matériau de construction réticulable par voie radicalaire en une quantité suffisante pour recouvrir au moins le support et une surface la plus supérieure dans la direction verticale du matériau de construction réticulé déposé sur le support,
- avant chaque étape II), le support est abaissé sur une distance prédéfinie, de façon qu'il se forme une couche du matériau de construction réticulable par voie radicalaire au-dessus de la couche la plus supérieure, dans la direction verticale, du matériau de construction réticulé, et
- dans l'étape II), un faisceau d'énergie éclaire et/ou irradie la zone sélectionnée de la couche du matériau de construction réticulable par voie radicalaire, correspondant à la section transversale choisie dans chaque cas du précurseur.

4. Procédé selon la revendication 2, **caractérisé en ce que**
- le support est disposé dans un récipient et peut être relevé verticalement dans la direction opposée à la gravité,
- le récipient met à disposition le matériau de construction réticulable par voie radicalaire,
- avant chaque étape II), le support est relevé sur une distance prédéfinie, de façon qu'il se forme une couche du matériau de construction réticulable par voie radicalaire en dessous de la couche la plus inférieure, dans la direction verticale, du matériau de construction réticulé, et
- dans l'étape II), un grand nombre de faisceaux d'énergie éclairent et/ou irradient simultanément la zone sélectionnée de la couche du matériau de construction réticulable par voie radicalaire, correspondant à la section transversale choisie dans chaque cas du précurseur.

5. Procédé selon la revendication 2, **caractérisé en ce que**
- dans l'étape II), le matériau de construction réticulable par voie radicalaire est appliqué à partir d'une ou plusieurs têtes d'impression, correspondant à la section transversale choisie dans chaque cas du précurseur, puis est éclairé et/ou irradié.

6. Procédé selon la revendication 1, **caractérisé en ce que** la fabrication de l'enveloppe (4) par le procédé de fabrication additive comprend les étapes suivantes :
- application d'une couche de particules comportant le matériau de construction sur une surface cible ;
- action d'énergie sur une partie sélectionnée de la couche, correspondant à une section transversale de l'enveloppe (4) de façon à lier les particules dans la partie sélectionnée ;
- répétition des étapes d'application et d'action d'énergie pour un grand nombre de couches, de façon à lier les parties liées des couches voisines, pour former l'enveloppe (4).

7. Procédé selon la revendication 1, **caractérisé en ce que** la fabrication de l'enveloppe (4) par le procédé de fabrication additive comprend les étapes suivantes :
- application d'une couche sur les particules comportant le matériau de construction sur une surface cible ;
- application d'un liquide sur une partie sélectionnée de la couche, correspondant à une section transversale de l'enveloppe (4), le liquide étant choisi de façon à lier les particules les unes aux autres par collage, fusion et/ou dissolution, dans les zones de la couche en contact avec le liquide,
- répétition des étapes d'application de la couche et du liquide, de façon à lier les parties liées des couches voisines, pour former l'enveloppe (4).

8. Procédé selon la revendication 1, **caractérisé en ce que** la fabrication de l'enveloppe (4) par le procédé de fabrication additive comprend les étapes suivantes :
- application d'un filament d'un matériau de construction au moins partiellement fondu sur un support, de façon à obtenir une couche du matériau de construction qui correspond à une première section transversale sélectionnée de l'enveloppe (4) ;
- application d'un filament du matériau de construction au moins partiellement fondu sur une couche préalablement appliquée du matériau de construction, de façon à obtenir une nouvelle couche du matériau de construction, qui correspond à une nouvelle section transversale sélectionnée de l'enveloppe (4) et qui est liée à la couche appliquée au préalable ;
- répétition de l'étape d'application d'un filament du matériau de construction au moins partiellement fondu sur une couche appliquée au préalable du matériau de construction, jusqu'à formation de l'enveloppe (4).

9. Procédé selon l'une des revendications 1 à 8, **caractérisé en ce que** le mélange réactionnel est mis à réagir pour former une mousse ayant une résistance à la compression, pour une déformation de 10 % mesurée selon DIN EN 826, ≥ 50 kPa, ou une mousse ayant une dureté de compression pour une compression de 40 %, mesurée selon ISO 3386-1, ≤ 15 kPa.

10. Procédé selon l'une des revendications 1 à 9, **caractérisé en ce que** le composant polyol comprend un polyétherpolyol difonctionnel et/ou un polyesterpolyol difonctionnel et/ou un polyéthercarbonatepolyol difonctionnel.

11. Procédé selon l'une des revendications 1 à 10, **caractérisé en ce que** le composant polyol comprend un agent porogène qui est un mélange d'eau et d'au moins un agent porogène physique.

12. Procédé selon l'une des revendications 1 à 11, **caractérisé en ce que** le mélange réactionnel est introduit sans interruption dans le volume (3, 3',3").

13. Objet (10) pouvant être obtenu par un procédé selon l'une des revendications 1 à 12, comprenant une enveloppe (4) qui définit un volume (3, 3', 3") à l'intérieur de l'enveloppe (4), et une mousse remplissant le volume (3, 3', 3") en totalité ou en partie,
**caractérisé en ce que** l'enveloppe (4) comprend un polymère de polyuréthane thermoplastique, la mousse comprend une mousse de polyuréthane ayant une résistance à la compression pour une compression de 10 %, mesurée selon DIN EN 826, ≥ 50 kPa ou une dureté de compression, pour une compression de 40 %, mesurée selon ISO 3386-1, ≤ 15 kPa, et la mousse et l'enveloppe (4) sont liées l'une à l'autre au moins partiellement par correspondance de matière.

14. Objet (10) selon la revendication 13, **caractérisé en ce que** l'enveloppe (4) comprend des éléments pénétrant dans le volume (3, 3', 3").

15. Objet (10) selon la revendication 13 ou 14, **caractérisé en ce que** l'objet (10) est un ballon.
